# EUROPÄISCHE PATENTANMELDUNG

(11) **EP 4 620 555 A1**
(43) Veröffentlichungstag der Anmeldung: **24.09.2025**
(21) Anmeldenummer: 24164060.6
(22) Anmeldetag: 18.03.2024
(51) Int. Cl.: B01D 39/16, B01D 39/08

(54) **FILTERMATERIAL MIT MEMBRAN UND FILTERELEMENT AUS SOLCHEM FILTERMATERIAL**

(71) Anmelder: Carl Freudenberg KG, 69469 Weinheim (DE)
(72) Erfinder: KOSS, Benedikt, 68163 Mannheim (DE); SCHOLZ, Tobias, 68519 Viernheim (DE); GÖBEL, Jan Thomas, 69488 Birkenau (DE); BREY, Madeline, 69469 Weinheim (DE); SCHACHT, Dr. Heiko, 69469 Weinheim (DE); HERMANN, Jochen, 66879 Reichenbach-Steegen (DE); GÄRTNER, Lukas, 69469 Weinheim (DE)

(57) **Zusammenfassung**

Die Erfindung betrifft ein Filtermaterial (10) zur Luftfiltration in einem Filterelement (100) und ein Filterelement aus solchem Filtermaterial.

Das Filtermaterial (10) ist mit einer anströmseitigen Vorfilterlage (2), einer Aktivkohlelage (3) und einer Verbundlage (1) ausgestattet, welche mindestens eine Membran aufweist. Erfindungsgemäß sind die Lagen stoffschlüssig miteinander verbunden.

Dank der Kombination von Vorfilterlage und Verbundlage mit Membran in einem Filtermaterial wird in vorteilhafter Weise gleichzeitig ein hohes Staubspeichervermögen bei hohem Qualitätsfaktor erreicht.

## Beschreibung

Die Erfindung betrifft ein Filtermaterial zur Luftfiltration in einem Filterelement mit einer anströmseitigen Vorfilterlage, einer Aktivkohlelage und einer Verbundlage, welche mit Membran ausgebildet ist, und ein Filterelement mit solchem Filtermaterial.

### Stand der Technik

Aus dem Stand der Technik sind Filter zur Filtration von Fluiden bekannt, insbesondere von Luft. Hierzu werden die Filterelemente üblicherweise in Filtergehäuse eingesetzt und von Luft durchströmt.

Aus dem Stand der Technik sind unterschiedlichste Filterelemente zum Filtern von Innenraumluft bekannt. In der DE 10 2013 011 457 A1 wird beispielsweise ein Innenraumluftfilterelement für die Fahrerkabine von Land- und Arbeitsmaschinen beschrieben.

Das Innenraumluftfilterelement umfasst eine Adsorptionsfilterlage mit Aktivkohle, eine Feinfilterlage, insbesondere zur Abscheidung von Aerosolen und eine umlaufende Dichtung zur Trennung der Rohseite von der Reinseite beim Einbau in ein Filtergehäuse. Ein derart mehrstufiger Filter wird auch als Multistage-Filter bezeichnet. Durch das Vorsehen einer plissierten Vorfilterlage kann erreicht werden, dass die Adsorptionslage und die Feinfilterlage vor zu großer Staubbeladung geschützt werden und deren Funktion möglichst lange gewährleistet bleiben. Nachteilig an diesem Aufbau ist, dass die Vorfilterlage zusätzlichen Bauraum braucht und das Filterelement weniger kompakt bauen kann.

### Aufgabenstellung

Aufgabe der vorliegenden Erfindung ist es ein Filtermaterial zu schaffen, welches im Vergleich zu bekannten Filtermaterialien eine über den Einsatzzeitraum stabilere Filtrationseffizienz aufweist, bei gleichbleibendem Bauraumbedarf.

### Technische Lösung

Gelöst wird diese Aufgabe durch ein Filtermaterial wie es nachfolgend beschrieben und beansprucht ist.

Erfindungsgemäß wurde als vorteilhaft erkannt eine Vorfilterlage, eine Aktivkohlelage als Adsorptionslage und eine Verbundlage mit Membran in einem Filtermaterial zu kombinieren.

Das erfindungsgemäße Filtermaterial dient zur Luftfiltration in einem Filterelement. Es besitzt eine anströmseitigen Vorfilterlage, welche als Grobstaubfilterlage ausgeführt ist, eine Aktivkohlelage als Adsorptionslage und einer Verbundlage mit Membran als mechanisches Filtermedium. Unter einer Membran wird folgendes verstanden: eine Membran ist eine dünne feinporige oder feinfaserige Lage. Die Membran kann somit abhängig von der Teilchengröße durchlässig bzw. halbdurchlässig bzw. undurchlässig sein. So können Teilchen im micron- und sub-micron-Bereich gefiltert werden. Die Membran kann aus Polymeren gefertigt sein. Membranen auf Polymerbasis benötigen in der Regel eine zusätzliche mechanische Verstärkung, da sie eine geringe Eigenstabilität aufweisen. Diese mechanische Verstärkung kann durch die anderen Lagen des Filtermaterials erfolgen. Die Membran kann beispielsweise aus folgenden Polymeren, allein oder in Kombination bestehen: PTFE, PE (auch LD-PE, HD-PE und UHMW-PE, PET, PVDF, PA, PLA, PU. Erfindungsgemäß weist die Verbundlage mindestens eine Membran auf einer Trägerlage auf, wobei die Membran auf ihrer anderen Seite mit einer Decklage versehen sein kann. Des Weiteren können mehrere Membranen und Träger/Decklagen miteinander zu einer Verbundlage kombiniert werden (z.B. Träger + Membran + Trägerlage + Membran + Decklage) Die Lagen sind stoffschlüssig miteinander verbunden. Die Trägerlage kann aus Grobfasern und die Decklage aus Grob- und/oder Microfasern bestehen.

Erfindungsgemäß sind die Vorfilterlage, die Aktivkohlelage und die Verbundlage stoffschlüssig miteinander verbunden. Die Lagen sind also nicht durch Co-Plissieren formschlüssig verbunden, also nicht durch gemeinsames Falten der Lagen, sondern stoffschlüssig. Diese stoffschlüssige Verbindung wird auch bezeichnet als "miteinander laminiert sein".

Erfolgen kann die stoffschlüssige Verbindung durch jegliche Art von Laminierung bzw. Kaschierung mittels Kleben (Polymerfäden, Puder, M-Web, reaktiver oder thermischer Klebstoff wie z.B. thermoplastischer Hotmelt, etc.), thermische Verpressung (Kalandrierung mit/ohne Schmelzfaseranteile) oder mittels Ultraschallverschweißen bzw. -kalandrierung. Die stoffschlüssige Verbindung kann vollflächig oder punktuell über die Fläche der Lagen vorliegen. Vorteile der stoffschlüssigen im Vergleich zur co-plissierten Verbindung der Lagen sind in einer höheren mechanischen Stabilität zu sehen. Weiterer Vorteil ist eine höhere Temperaturstabilität: Nach einer Wärmelagerung des Filtermaterials ist ein geringerer Druckverlustanstieg zu beobachten im Vergleich zu einem co-plissierten Filtermaterial mit ansonsten gleichem Aufbau. Auch kann das Filtermaterial mit seinen stoffschlüssig verbundenen Lagen gut insgesamt plissiert werden. Ohne stoffschlüssige Verbindung lassen sich in der Regel maximal zwei Lagen zusammen co-plissieren. Eine weitere Lage muss dann separat plissiert werden, sodass ein Filterelement sich aus zwei Schichten, nämlich der plissierten und der co-plissierten Schicht zusammensetzt. Ein solcher aus mehreren Schichten zusammengesetztes Filterelement braucht dann jedoch einen größeren Bauraum. Dank der stoffschlüssigen Verbindung aller Lagen kann also ein Filtermedium mit drei und mehr Lagen geschaffen werden, welches bei nachfolgendem Plissieren einen geringeren Bauraumbedarf aufweist im Vergleich zu co-plissierten Filtermedien.

Dank der Kombination der Vorfilterlage und der Verbundlage mit Membranen einem Filtermaterial wird gleichzeitig ein hohes Staubspeichervermögen bei hohem Qualitätsfaktor erreicht. Bezogen auf seine Dicke weist ein solches Material gute Werte auf: durch Einsatz des Filtermaterials in einem Filter lässt sich eine gute Filtrationseffizienz erreichen ohne Zunahme des Druckverlustes.

Der Vorteil der Verwendung einer Membran im Vergleich zu dickeren Fasern ist, dass diese eine größere Oberfläche aufweisen und damit eine verbesserte Filtrationsleistung und eine längere Filterlebensdauer ermöglichen. Besonders der auf Grund geringer Faserdurchmessern hohe Sperreffekt (Interceptionseffekt) wirkt sich dabei positiv aus. Im Unterschied zur elektrostatischen Abscheidung bleibt der der mechanischen Abscheidung zuzurechnende Effekt über die Betriebsdauer eines Filters in hohem Maß erhalten. Darüber hinaus besitzen Filtermedien mit Membran einen geringeren Druckverlust, womit ein geringerer Energiebedarf für das Filterelement einhergeht.

Das erfindungsgemäße Filtermaterial weist eine Adsorptionslage auf, ausgebildet als eine Aktivkohlelage, d.h. es besitzt eine Lage mit einem Anteil Aktivkohle als Adsorbens. Ein Filterelement aus einem solchen Filtermaterial wird als Kombifilter bezeichnet.

In besonders vorteilhafter Weiterbildung des Filtermediums erfolgt die Verbindung der Lagen durch Verkleben mit einem polyolefinischen Hotmelt als thermoplastischer Schmelzklebstoff. Dies hat die folgenden Vorteile:
- gute Haftungseigenschaften auf den zu verklebenden Substraten,
- eine hohe Wärmestabilität von >105 °C,
- Stabilität im Hinblick auf oxidative Abbauprozesse,
- hohe Alterungsbeständigkeit und
- Unauffälligkeit im Hinblick auf Fogging und Geruch.

Auch die Lagen der Verbundlage können mittels polyolefinischen Hotmelt miteinander verklebt sein.

In Weiterbildung der Erfindung ist beim Filtermaterial die Vorfilterlage und/oder die Verbundlage elektrostatisch aufgeladen, z.B. mittels Corona- oder Hochspannungstechnologie. Dadurch kann das Staubspeichervermögen weiter verbessert werden.

In einer möglichen Ausgestaltungsvariante des Filtermaterials ist die Aktivkohlelage mit einem dauerklebrigen Adhäsionsnetz ausgestattet. Das dauerklebrige Adhäsionsnetz kann auch als netzartige Adhäsionsschicht bezeichnet werden, welche in die Aktivkohlelage eingebracht ist. Zum Aufbau der Adhäsionsschicht kann ein polyolefinischer Hot Melt verwendet werden, mit das Adhäsionsnetz ausbildendenden Filamenten von 5 bis 20 µm Durchmesser. Durch das dauerklebrigen Adhäsionsnetz können in vorteilhafter Weise vornehmlich gröbere Staubpartikel abgeschieden und so nachfolgende Lagen geschützt werden. Weitere Funktion des Adhäsionsnetzes ist es, die Adsorberpartikel der Aktivkohlelage anzubinden und zu fixieren.

In Weiterbildung des Filtermaterials weist das Filtermaterial eine zusätzliche Grobfilterlage auf, welche auch als Grobstaubfilterlage bezeichnet werden kann. Funktion der Grobstaubfilterlage ist einerseits eine Trägerstruktur für die Aktivkohlelage bzw. eine Stützstruktur für die Verbundlage bereitzustellen und andererseits einen Beitrag zur Filtration zu leisten. Vorteile eines solchen Filtermaterials sind somit eine höhere Stabilität und höheres Staubspeichervermögen. Ein höheres Staubspeichervermögen trägt dazu bei den Druckverlustanstieg des Filterelements über den Einsatzzeitraum möglichst gering zu halten, insbesondere trotz des Vorhandenseins der hochabscheidenden Nanofasern. Dazu kann die Grobstaubfilterlage in Durchströmungsrichtung gesehen stromaufwärtig der Verbundlage angeordnet sein.

In möglicher Ausgestaltung des Filtermaterials bilden die Vorfilterlage oder die ggfs. vorhandene Grobfilterlage einen Träger und damit eines Stützstruktur für die Aktivkohlelage. Auch kann die Aktivkohlelage insbesondere aus miteinander verklebten Aktivkohlepartikeln aufgebaut sein.

Gerade bei einer Aktivkohlelage, welche eine Vielzahl von einzelnen Aktivkohlepartikeln aufweist, ist es im Stand der Technik üblich, die Schüttung dieser Partikel auf eine Stützstruktur aufzubringen und durch Verklebung zu sichern. Wird wie hier beansprucht die Vorfilterlage oder die ggfs. vorhandene Grobfilterlage als Träger verwendet, so kann durch die Vorfilterlage oder die ggfs. vorhandene Grobfilterlage auch noch eine Filtrationsfunktion erfüllt werden, was die Filtrationsleistung des Filtermaterials weiter erhöht.

Es sind unterschiedliche Varianten des Filtermaterials denkbar, welche sich in ihrem Aufbau unterscheiden. Der Aufbau der Verbundlage ist dabei einheitlich - in Durchströmungsrichtung gesehen - wie folgt: Trägerlage, Membran, und ggfs. weitere Lagen.

In einer ersten Variante hat das Filtermaterial eine anströmseitige Vorfilterlage, eine abströmseitige Verbundlage und eine dazwischen befindliche Aktivkohlelage.

Damit ergibt sich in Durchströmungsrichtung gesehen folgende Reihenfolge der Lagen:
1.) Vorfilterlage
2.) Aktivkohlelage
3.) Verbundlage

In einer zweiten Variante hat das Filtermaterial eine anströmseitige Vorfilterlage, eine abströmseitige Grobfilterlage mit darauf aufgebrachter Aktivkohlelage und eine sich dazwischen befindliche Verbundlage, wobei insbesondere die Vorfilterlage und die Verbundlage als eine stoffschlüssig miteinander verbundene Einheit ausgebildet sind, z.B. mittel thermischer Verschweißung.

Damit ergibt sich in Durchströmungsrichtung gesehen folgende Reihenfolge der Lagen:
1.) Vorfilterlage
2.) Verbundlage
3.) Aktivkohlelage
4.) Grobfilterlage

In einer dritten Variante hat das Filtermaterial eine anströmseitige Vorfilterlage, mit darauf aufgebrachter Aktivkohlelage, wobei die Aktivkohlelage stromabwärtig der Vorfilterlage ist, eine abströmseitige Verbundlage und eine sich dazwischen befindliche Grobfilterlage, wobei insbesondere die Grobfilterlage und die Verbundlage als eine stoffschlüssig miteinander verbundene Einheit ausgebildet sind und z.B. mit thermoplastischem Hotmelt miteinander verklebt sind.

Damit ergibt sich in Durchströmungsrichtung gesehen folgende Reihenfolge der Lagen:
1.) Vorfilterlage
2.) Aktivkohlelage
3.) Grobfilterlage
4.) Verbundlage

In einer vierten Variante ist eine anströmseitige Vorfilterlage, eine Grobfilterlage mit stromaufwärtig darauf aufgebrachter Aktivkohlelage, eine weitere Grobfilterlage und eine abströmseitige Verbundlage vorhanden. Insbesondere die weitere Grobfilterlage und die Verbundlage sind als eine stoffschlüssig miteinander verbundene Einheit ausgebildet, z.B. mittel thermischer Verschweißung.

Damit ergibt sich in Durchströmungsrichtung gesehen folgende Reihenfolge der Lagen:
1.) Vorfilterlage
2.) Aktivkohlelage
3.) Grobfilterlage
4.) Grobfilterlage
5.) Verbundlage

Stoffschlüssig miteinander verbundene Einheit bei der zweiten, dritten und vierten Variante meint, dass die Vorfilterlage und Verbundlage bzw. die Grobfilterlage und Verbundlage schon durch einen vorhergehenden Prozess miteinander stoffschlüssig verbunden sind, bevor die stoffschlüssige Verbindung mit den weiteren Lagen in einem weiteren Prozessschritt erfolgt. Die stoffschlüssige Verbindung der Vorfilterlage bzw. der Grobfilterlage und der Verbundlage kann vollflächig thermisch und/oder durch punktuelle Lagenverschweißung erfolgt sein.

Dadurch kann eine besonders hohe Festigkeit und gute Verarbeitbarkeit des Filtermaterials erreicht werden.

In einer möglichen Ausgestaltung des Filtermaterials besitzt dieses einen progressiven Aufbau derart, dass die Porosität der Lagen Vorfilterlage, Aktivkohlelage und Verbundlage von einer Anströmseite (Rohgasseite) zu einer Abströmseite (Reingasseite) des Filtermaterials von einer Lage zur nächsten Lage graduell abnimmt. Unter Porosität wird hier das Verhältnis von Hohlraumvolumen zu Gesamtvolumen einer jeweiligen Vliesstofflage verstanden. Oder in anderen Worten: Progressiver Aufbau meint, dass die Lagen - in Durchströmungsrichtung gesehen - immer feiner werden. Ein derartiges Filtermaterial bietet eine besonders gute Staubfiltration und einer über die Zeit stabilen Druckdifferenz des Filtermaterials.

Die Erfindung betrifft auch ein Filterelement mit einem wie vorstehend beschriebenen, plissierten Filtermaterial.

In möglicher Ausgestaltung des Filterelements können am plissierten Filtermaterial Kantenbänder oder Rahmenelemente angebracht sein, welche eine Stabilisierung des Filterelements bewirken und als Dichtelemente zu einem das Filterelement aufnehmenden Filtergehäuse dienen können.

Die Erfindung betrifft auch die Verwendung eines wie obenstehend beschriebenen Filterelements als Innenraumluftfilter zur Filtration und Reinigung der Kabinenzuluft in einem Fahrzeug, insbesondere in einem PKW, einem Nutzfahrzeug oder einem Bus.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar. Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine erste Ausführungsvariante des Filtermaterials in einer Schnittdarstellung
- Fig. 2: eine zweite Ausführungsvariante des Filtermaterials in einer Schnittdarstellung
- Fig. 3: eine dritte Ausführungsvariante des Filtermaterials in einer Schnittdarstellung
- Fig. 4: eine vierte Ausführungsvariante des Filtermaterials in einer Schnittdarstellung
- Fig. 5: einen Ausschnitt aus einer Ansicht des Filtermaterials nach erfolgtem Plissieren
- Fig. 6: ein Filterelement mit dem Filtermaterial in einer räumlichen Darstellung

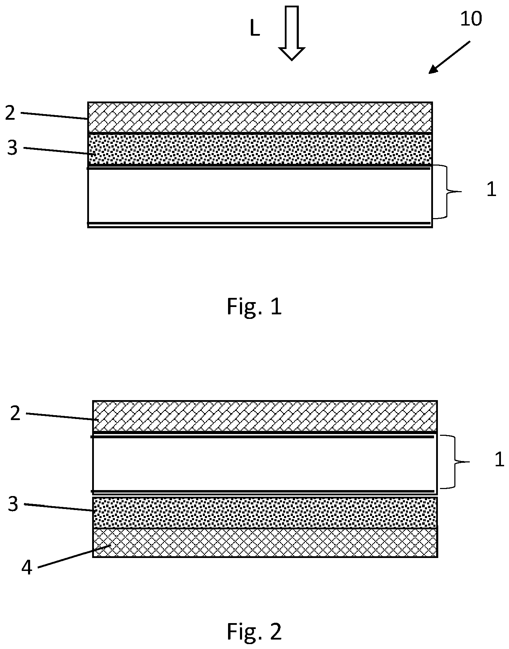

Fig. 1 zeigt eine erste Ausführungsvariante des Filtermaterials 10 in einer Schnittdarstellung. Die Durchströmungsrichtung des Luftstroms ist mit einem Pfeil L dargestellt. Das Filtermaterial 10 weist eine anströmseitigen Vorfilterlage 2, eine mittige Aktivkohlelage 3 und eine abströmseitige Verbundlage 1 auf, welche als Feinfilterlage mit einer Membran oder mehreren Membranen ausgebildet ist. Die Verbundlage 1 besitzt eine Mehrzahl von Lagen, nämlich mindestens eine Trägerlage und eine Membran wobei die Lagen stoffschlüssig miteinander verbunden sind. Die Verbundlage kann aber auch aus mehreren Träger- Membran- und Decklagen bestehen. Decklage und Trägerlage sind in der Abbildung nur angedeutet. Mögliche konkrete Ausgestaltungen der Verbundlage sind:
1. Trägerlage + Membran
2. Trägerlage + Membran + Decklage
3. Trägerlage + Membran + Trägerlage + Membran
4. Trägerlage + Membran + Trägerlage + Membran + Decklage

Werden mehrere Membranen und/oder mehrere Träger verwendet, so können sich diese in ihren Eigenschaften unterscheiden. So können die Membranen beispielsweise unterschiedliche Filtereffizienzen aufweisen.

Diesen Aufbau der Verbundlage 1 besitzen auch die nachfolgend beschriebenen anderen Ausführungsvarianten. Vorfilterlage 2, Aktivkohlelage 3 und Verbundlage 1 sind stoffschlüssig miteinander verbunden mit thermoplastischem Hotmelt (nicht dargestellt). Decklage, Membran und Trägerlage der Verbundlage1 können untereinander ebenfalls mit thermoplastischen Hotmelt oder durch thermisches Verschweißen verbunden sein.

Fig. 2 zeigt eine zweite Ausführungsvariante des Filtermaterials 10 in einer Schnittdarstellung. Vorgesehen ist eine anströmseitige Vorfilterlage 2, eine abströmseitige Grobfilterlage 4 mit stromaufwärtig darauf aufgebrachter Aktivkohlelage 3 und eine dazwischen befindliche Verbundlage 1.

Vorfilterlage 2 und Verbundlage 1 sind durch thermisches Verschweißen miteinander verbunden. Verbundlage 1, Aktivkohlelage 3 und Grobfilterlage 4 sind stoffschlüssig miteinander verbunden mit thermoplastischem Hotmelt.

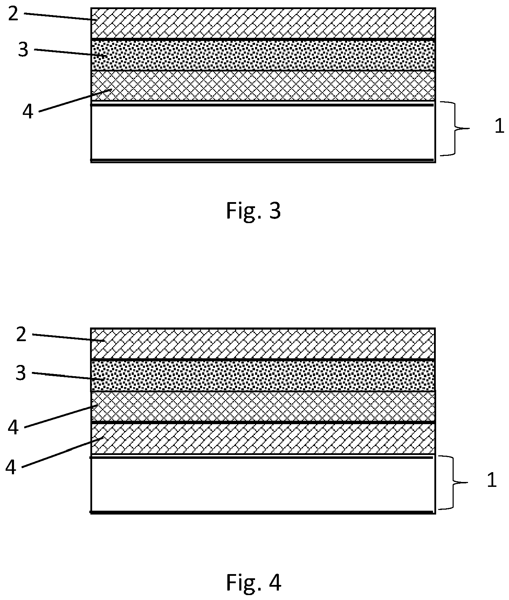

Fig. 3 zeigt eine dritte Ausführungsvariante des Filtermaterials 10 in einer Schnittdarstellung. Verwendet wird hier eine anströmseitige Vorfilterlage 2, eine abströmseitige Verbundlage 1 und eine dazwischen befindliche Grobfilterlage 4 mit darauf aufgebrachter Aktivkohlelage 3, wobei die Aktivkohlelage 3 stromaufwärtig der Grobfilterlage 4 angeordnet ist.

Grobfilterlage 4 und Verbundlage 1 sind stoffschlüssig miteinander verbunden mit thermoplastischem Hotmelt. Vorfilterlage 2, Aktivkohlelage 3 und Grobfilterlage 4 sind untereinander mit thermoplastischem Hotmelt verbunden.

Fig. 4 zeigt eine vierte Ausführungsvariante des Filtermaterials 10 in einer Schnittdarstellung. Im Unterschied zur Variante gemäß Figur 3 wird eine weitere Filterlage verwendet, nämlich eine Grobfilterlage 4, welche stromaufwärtig der Verbundlage 1 positioniert ist.

Grobfilterlage 4 und Verbundlage 1 sind durch thermisches Verschweißen miteinander verbunden. Vorfilterlage 2, Aktivkohlelage 3 und beide Grobfilterlagen 4 sind stoffschlüssig miteinander verbunden mit thermoplastischem Hotmelt.

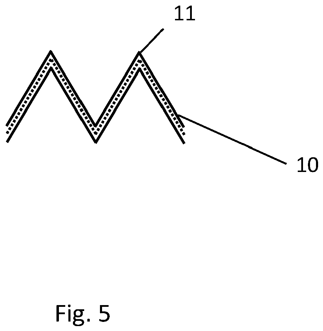

Fig. 5 zeigt einen Ausschnitt aus einer Ansicht des Filtermaterials 10 - unabhängig von dessen Aufbau aus mehreren Lagen - nach erfolgtem Plissieren. Eine Faltkante ist beispielhaft mit 11 markiert.

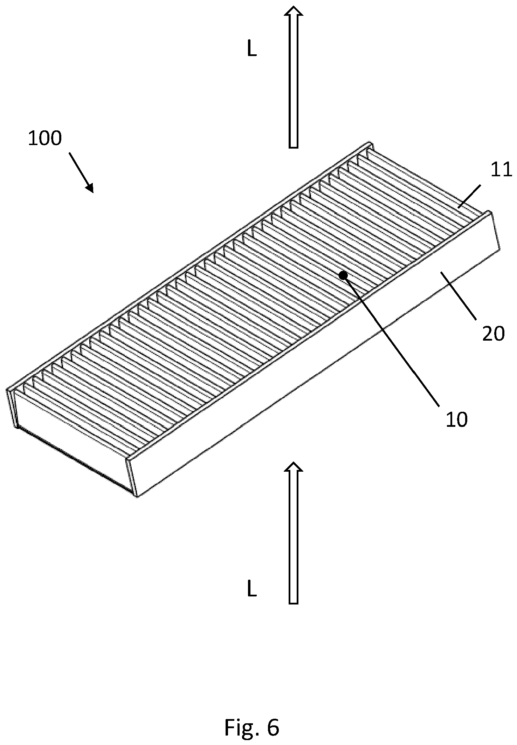

Fig. 6 zeigt ein Filterelement 100 mit dem Filtermaterial 10 in einer räumlichen Darstellung. Das Filterelement 100 mit dem Filtermaterial 10, welches wie in den Figuren 1 bis 4 ausgestaltet sein kann und wie in Figur 5 dargestellt plissiert wurde, besitzt am plissierten Filtermaterial 10 angebrachte Kantenbänder 20, welche zu einer Stabilisierung des Filterelements 100 beitragen und eine Abdichtung gegenüber einer hier nicht dargestellten Filteraufnahme bewirken können.

### Bezugszeichenliste

- 1: Verbundlage mit Membran
- 2: Vorfilterlage
- 3: Aktivkohlelage
- 4: Grobfilterlage

- 10: Filtermaterial
- 11: Faltkante

- 20: Kantenband

- 100: Filterelement

- L: Durchströmungsrichtung Luftstrom

## Patentansprüche

1. Filtermaterial (10) zur Luftfiltration in einem Filterelement (100) mit einer anströmseitigen Vorfilterlage (2), einer Aktivkohlelage (3) und einer Verbundlage (1), welche mit mindestens einer Membranlage ausgebildet ist, **dadurch gekennzeichnet, dass**
die Vorfilterlage (2), die Aktivkohlelage (3) und die Verbundlage (1) stoffschlüssig miteinander verbunden sind.

2. Filtermaterial nach einem der vorangehenden Ansprüche, **dadurch gekennzeichnet, dass**
die Vorfilterlage (2) und/oder die Verbundlage (1) elektrostatisch aufgeladen sind.

3. Filtermaterial nach einem der vorangehenden Ansprüche, **dadurch gekennzeichnet, dass**
die Aktivkohlelage (3) mit einem dauerklebrigen Adhäsionsnetz ausgestattet ist.

4. Filtermaterial nach einem der vorangehenden Ansprüche, **dadurch gekennzeichnet, dass**
das Filtermaterial (10) eine zusätzliche Grobfilterlage (4) aufweist.

5. Filtermaterial nach Anspruch 4, **dadurch gekennzeichnet, dass** die Vorfilterlage (2) oder die Grobfilterlage (4) einen Träger für die Aktivkohlelage (3) bilden.

6. Filtermaterial nach einem der vorangehenden Ansprüche, **dadurch gekennzeichnet, dass**
die Aktivkohlelage (3) aus miteinander verklebten Aktivkohlepartikeln aufgebaut ist.

7. Filtermaterial nach einem der Ansprüche 1 bis 6, **dadurch gekennzeichnet, dass**
das Filtermaterial (10) folgenden Aufbau aufweist:
eine anströmseitige Vorfilterlage (2), eine abströmseitige Verbundlage (1) und eine dazwischen befindliche Aktivkohlelage (3).

8. Filtermaterial nach einem der Ansprüche 1 bis 6, **dadurch gekennzeichnet, dass**
das Filtermaterial (10) folgenden Aufbau aufweist:
eine anströmseitige Vorfilterlage (2), eine abströmseitige Grobfilterlage (4) mit darauf aufgebrachter Aktivkohlelage (3) und eine dazwischen befindliche Verbundlage (1), wobei insbesondere die Vorfilterlage (2) und
die Verbundlage (1) als eine stoffschlüssig miteinander verbundene Einheit ausgebildet sind.

9. Filtermaterial nach einem der Ansprüche 1 bis 6, **dadurch gekennzeichnet, dass**
das Filtermaterial (10) folgenden Aufbau aufweist:
eine anströmseitige Vorfilterlage (2), eine abströmseitige Verbundlage (1) und mindestens eine dazwischen befindliche Grobfilterlage (4) und eine Aktivkohlelage (3), wobei insbesondere die Aktivkohlelage (3) stromaufwärtig auf einer ersten Grobfilterlage (4) aufgebracht ist und
wobei gegebenenfalls zusätzlich eine zweite Grobfilterlage (4) und die Verbundlage (1) als eine stoffschlüssig miteinander verbundene Einheit ausgebildet sind.

10. Filtermaterial nach einem der Ansprüche 1 bis 7, **dadurch gekennzeichnet, dass**
die Lagen des Filtermaterials (1, 2, 3) einen progressiven Aufbau aufweisen.

11. Filterelement (100) mit einem Filtermaterial (10) nach einem der vorangehenden Ansprüche, wobei das Filtermaterial (10) plissiert ist und wobei am plissierten Filtermaterial (10) Kantenbänder (20) oder Rahmenelemente angebracht sind.
